# FASCICULE DE BREVET EUROPEEN

(11) **EP 0 449 678 B1**
(45) Date de publication et mention de la délivrance du brevet: **25.08.1993**
(21) Numéro de dépôt: 91400511.1
(22) Date de dépôt: 26.02.1991
(51) Int. Cl.: B60T 8/18

(54) **Compensateur de freinage asservi à la charge**
Lastabhängiger Bremsdruckregler
Load sensitive brake pressure corrector

(30) Priorité: 29.03.1990 FR 9004004
(43) Date de publication de la demande: 02.10.1991
(73) Titulaire: ALLIEDSIGNAL EUROPE SERVICES TECHNIQUES, 93700 Drancy (FR)
(72) Inventeur: Levrai, Roland, Bendix Europe Services Techn., F-93700 Drancy (FR); Castel, Philippe, Bendix Europe Services Techn., F-93700 Drancy (FR); Moinard, Patrice, Bendix Europe Services Techn., F-93700 Drancy (FR)
(74) Mandataire: Bentz, Jean-Paul

(56) Documents cités:
- DE-A- 3 343 614

## Description

La présente invention concerne un compensateur de freinage d'un véhicule, asservi à la charge du véhicule.

De tels compensateurs sont bien connus dans la technique et leur fonctionnement ne sera pas décrit ici en détails.

Le document DE-A-3 343 614 décrit, par exemple, un compensateur selon le préambule de la revendication principale. Ce compensateur est du type comprenant un premier piston coulissant dans un alésage étagé pratiqué dans un corps, et portant un clapet normalement ouvert disposé entre une source de fluide sous pression et le circuit de freinage associé, le premier piston étant mobile à l'encontre d'un ressort sous l'effet de la pression du fluide qui tend à fermer le clapet, une tige coulissante étant normalement en appui entre un poussoir dont la position est fonction de la charge du véhicule, et le clapet.

Un tel compensateur présente un défaut important qui peut devenir grave dans certains cas. En effet, on sait qu'un tel compensateur sert à moduler la pression du fluide de freinage dans les roues arrières en fonction de la pression de la source et de la charge du véhicule pour éviter un blocage des roues arrières lors du freinage. Or lors d'un freinage, les roues arrières sont naturellement délestées.

Car il se produit un report de charge vers l'avant du véhicule. La détermination du point de coupure du compensateur résultant du réglage du compensateur en usine et ce réglage dépendant d'un compromis choisi tenant compte ou non d'un certain report de charge, le freinage du véhicule n'est donc optimal que dans certains cas très spécifiques.

En effet, si le réglage est prévu pour un report de charge moyen, en cas de freinage rapide où le report de charge est plus important que le report de charge moyen prévu, du fait du temps de réponse inhérent au compensateur, ce dernier "voit" une charge plus lourde que celle existant réellement. Les roues arrières sont alors trop freinées par rapport à ce qu'elles peuvent supporter, et il peut en résulter un blocage de ces roues arrières. Cet effet pervers s'amplifie avec l'importance demandée du freinage et va donc totalement à l'encontre de la sécurité.

Si le réglage est prévu pour un report de charge maximal, c'est le contraire qui se passe, et les roues arrières ne sont pas assez freinées par rapport à ce qu'elles peuvent supporter (sauf en freinage rapide). Les roues avant assurent alors une trop grande partie du freinage du véhicule, ce qui nécessite un sur-dimensionnement des freins correspondant, et qui peut entraîner un blocage des roues avant en cas de mauvaise adhérence.

La présente invention a pour but d'obvier à cet inconvénient majeur résultant d'un réglage de type compromis, en faisant en sorte que le compensateur mémorise la charge du véhicule avant le report de charge dù au freinage. Le point de coupure du compensateur peut alors être réglé en usine indépendamment du délestage et ne résulte plus d'un compromis pouvant avoir un effet pervers.

Dans ce but, selon l'invention, le compensateur comporte un moyen de verrouillage immobilisant la tige coulissante lors d'un freinage du véhicule.

De préférence l'immobilisation est commandée lorsque la pression du fluide dans le circuit de freinage associé dépasse un seuil déterminé.

De préférence, le moyen de verrouillage est disposé autour de la tige entre le poussoir et le clapet. Il comporte en outre un deuxième piston coulissant disposé dans l'alésage, sensible à la pression du fluide dans le circuit de freinage associé, et commandant la mise en oeuvre du moyen de verrouillage.

La présente invention sera mieux comprise, et d'autres buts, avantages et caractéristiques de celle-ci apparaîtront plus clairement à la lecture de la description qui suit d'un mode préféré de réalisation donné à titre d'exemple non limitatif en référence à la planche unique sur laquelle :
- la Figure 1 représente schématiquement en coupe un compensateur selon l'invention, et
- les Figures 2 à 5 représentent schématiquement en coupe et partiellement d'autres modes de réalisation de l'invention.

En référence maintenant aux Figures, un conduit 10 relie le compensateur à la source de fluide sous pression, par exemple un maître cylindre, tandis qu'un conduit 12 relie le compensateur au circuit de freinage associé.

Un piston 14 coulissant dans un alésage étagé est rappelé en position de repos par un ressort 16, et consitue un siège pour un clapet 18, par exemple une bille, normalement ouvert, permettant une communication entre les conduits 10 et 12. L'information de la charge du véhicule est transmise sous forme d'une force s'exerçant sur un poussoir 20 à l'encontre d'un ressort 22 dans l'exemple représenté. Ce poussoir meut une tige coulissante 24 dont une extrémité appuie normalement sur le clapet 18 en position de repos pour maintenir ce dernier ouvert.

Lors d'un freinage, la pression du fluide dans le conduit 10 tend à pousser le piston 14 vers le bas (sur la Figure) à l'encontre du ressort 16, ce qui tend à fermer le clapet 18. La position du poussoir 20, qui est essentiellement fonction de la charge du véhicule, détermine alors le moment de fermeture de ce clapet.

Pour obvier à l'inconvénient précité, c'est à dire selon l'invention, pour mémoriser l'information de la charge réelle du véhicule, et donc la position normale de la tige 24, le compensateur inclut un moyen de verrouillage immobilisant la tige 24 dès lors que la pression du fluide dans le circuit de freinage associé dépasse un seuil déterminé.

Un second piston 30 est disposé dans l'alésage. Ce piston 30, de type annulaire, entoure la tige 24, et constitue d'ailleurs pour celle-ci un moyen de guidage additionnel.

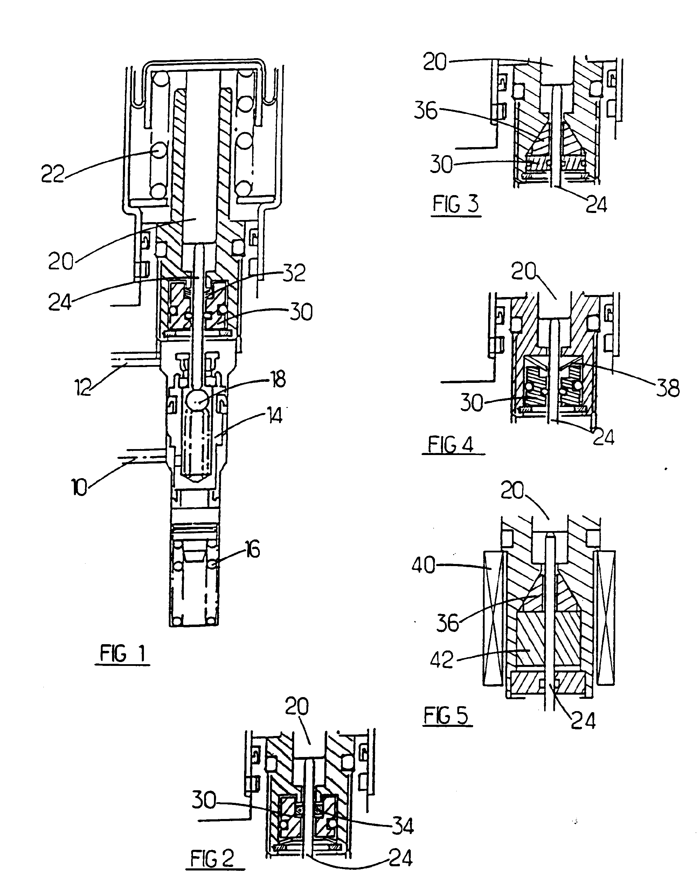

Selon le mode de réalisation illustré Figure 1, le moyen de verrouillage est constitué par un empilement de rondelles flexibles 32 entourant la tige 24, disposé entre le corps du compensateur et le second piston 30. Ces rondelles présentent une ouverture intérieure dont le diamètre au repos est supérieur à celui de la tige 24 mais viennent serrer cette tige 24 lorsqu'elles sont compressées. Ces rondelles peuvent être notamment du type Belleville, à créneaux, en éventail.

On comprendra aisément que, lors d'un freinage, la pression s'exerçant sur le second piston 30 tend à comprimer les rondelles 32. A partir d'un seuil déterminé, les rondelles 32 serrent la tige 24 de manière à l'immobiliser quelle que soit la position réelle du poussoir 20 dont elle n'est pas solidaire. Le compensateur conserve donc l'information de la charge réelle du véhicule, et la pression de freinage dans le circuit associé correspond à la valeur appropriée.

Figure 2, on a illustré un autre mode de réalisation dans lequel les rondelles 32 du mode de réalisation représenté Figure 1, sont remplacées par un anneau élastique 34 présentant une ouverture intérieure au repos d'un diamètre supérieur à celui de la tige 24. Bien évidemment, cet anneau élastique 34 est logée dans un espace annulaire ménagé entre le second piston 30 et le corps du compensateur, cet espace étant tel que lorsque le second piston 30 reçoit une pression, son volume diminue suffisamment pour que l'anneau élastique 34 viennent serrer la tige 24 et l'immobiliser.

Dans le mode de réalisation illustré Figure 3, le moyen de verrouillage est constitué par une pluralité de mors 36 affectant une forme extérieure de section sensiblement tronconique, dont la surface vient s'appuyer sur une partie de forme complémentaire pratiquée dans l'alésage. Ces mors 36 définissent, au repos, une ouverture d'un diamètre supérieur à celui de la tige 24. On comprendra que, sous l'effet de la pression dans le circuit de freinage associé, le second piston 30 vient pousser les mors contre la partie de forme complémentaire, et qu'il en résulte un serrage des mors 36 contre la tige 24 qui est ainsi immobilisée.

Figure 4, un quatrième mode de réalisation est illustré dans lequel le moyen de verrouillage est constitué par des mors en forme de leviers 38 prenant appui sur le corps du compensateur et recevant une force exercée par le second piston 30 sous l'effet de la pression du fluide dans le circuit de freinage associé.

Le fonctionnement est identique aux autres.

On comprendra que de nombreuses variantes pourront être apportées par l'homme du métier sans sortir du cadre de l'invention tel que défini par les revendications annexées. En particulier, et en référence à la Figure 5, on pourra aisément remplacer le second piston 30 par un électro-aimant comportant un noyau magnétique 42 et un solenoïde 40, lequel sera excité lors d'un freinage pour amener les mors 36 à serrer la tige 24, l'information de freinage pouvant être favorablement celle qui assure l'allumage des feux de stop du véhicule.

## Revendications

1. Compensateur de freinage d'un véhicule, ce compensateur étant asservi à la charge du véhicule et étant du type comprenant un premier piston (14) coulissant dans un alésage étagé pratiqué dans un corps, et portant un clapet (18) normalement ouvert disposé entre une source de fluide sous pression et le circuit de freinage associé, ledit premier piston (14) étant mobile à l'encontre d'un ressort (16) sous l'effet de la pression dudit fluide qui tend à fermer ledit clapet (18), une tige coulissante (24) étant normalement en appui entre un poussoir (20) dont la position est fonction de la charge du véhicule, et ledit clapet (18), caractérisé en ce qu'il comporte un moyen de verrouillage immobilisant ladite tige coulissante (24) lors d'un freinage du véhicule.

2. Compensateur de freinage selon la revendication 1, caractérisé en ce que ledit moyen de verrouillage est disposé autour de ladite tige (24) entre ledit poussoir (20) et ledit clapet (18).

3. Compensateur de freinage selon la revendication 1 ou 2, caractérisé en ce que ladite tige coulissante (24) est immobilisée dès que la pression du fluide dans le circuit de freinage associé dépasse un seuil déterminé.

4. Compensateur de freinage selon la revendication 3, caractérisé en ce qu'il comporte en outre un deuxième piston coulissant (30) disposé dans ledit alésage, sensible à la pression du fluide dans ledit circuit de freinage associé, et commandant la mise en oeuvre dudit moyen de verrouillage.

5. Compensateur de freinage selon la revendication 4, caractérisé en ce que ledit moyen de verrouillage comprend un jeu de rondelles flexibles (32) entourant ladite tige (24) et prenant appui d'une part sur ledit corps, et d'autre part sur ledit deuxième piston (30), lesdites rondelles (32) présentant une ouverture intérieure dont le diamètre au repos est supérieure à celui de ladite tige (24) et venant serrer ladite tige sous l'effet d'une force de compression appliquée par ledit deuxième piston (30).

6. Compensateur de freinage selon la revendication 4, caractérisé en ce que ledit moyen de verrouillage comprend une pluralité de mors (36,38) entourant ladite tige et définissant au repos une ouverture d'un diamètre supérieur à celui de ladite tige (24) et venant serrer cette dernière sous l'effet d'une force appliquée par le deuxième piston (30).

7. Compensateur de freinage selon la revendication 6, caractérisé en ce que chaque mors (36) affecte une forme extérieure de section sensiblement tronconique dont la surface vient s'appuyer sur une partie de forme complémentaire pratiquée dans ledit alésage pour serrer ladite tige (24).

8. Compensateur de freinage selon la revendication 6, caractérisé en ce que les mors (38) affectent la forme d'un levier prenant appui sur ledit corps et recevant une force dudit deuxième piston (30) pour serrer ladite tige (24).

9. Compensateur de freinage selon la revendication 4, caractérisé en ce que ledit moyen de verrouillage comprend un anneau élastique (34) entourant ladite tige (24), logé dans un espace annulaire ménagé entre ledit deuxième piston (30) et ledit corps, ledit anneau élastique (34) présentant une ouverture intérieure dont le diamètre au repos est supérieur à celui de la tige (24), le volume dudit espace étant tel que sous l'action dudit deuxième piston (30), ledit anneau élastique (34) vienne compresser ladite tige (24) et l'immobiliser.

10. Compensateur de freinage selon la revendication 1 ou 2, caractérisé en ce que ledit moyen de verrouillage est commandé au moyen d'un électro-aimant (40,42) excité lors d'un freinage.

## Claims

1. Brake proportioning valve of a vehicle, this proportioning valve being subject to the load of the vehicle and being of the type comprising a first piston (14) sliding in a stepped bore made in a body, and carrying a normally open shutter (18) arranged between a source of fluid under pressure and the associated brake circuit, said first piston (14) being moveable counter to a spring (16) under the effect of the pressure of said fluid which tends to close said shutter (18), a sliding rod (24) normally bearing between a pusher (20), the position of which is a function of the load of the vehicle, and said shutter (18), characterized in that it comprises a locking means immobilizing said sliding rod (24) during a braking of the vehicle.

2. Brake proportioning valve according to claim 1, characterized in that said locking means is arranged around said rod (24) between said pusher (20) and said shutter (18).

3. Brake proportioning valve according to claim 1 or 2, characterized in that said sliding rod (24) is immobilized as soon as the pressure of the fluid in the associated brake circuit exceeds a specific threshold.

4. Brake proportioning valve according to claim 3, characterized in that it comprises, furthermore, a second sliding piston (30) arranged in said bore, sensitive to the pressure of the fluid in said associated brake circuit and commanding the activation of said locking means.

5. Brake proportioning valve according to claim 4, characterized in that said locking means comprises a set of flexible washers (32) surrounding said rod (24) and bearing on said body on the one hand and on said second piston (30) on the other hand, said washers (32) having an inner orifice, of which the diameter at rest is larger than that of said rod (24) and which clamps said rod under the effect of a compression force exerted by said second piston (30).

6. Brake proportioning valve according to claim 4, characterized in that said locking means comprises a plurality of jaws (36, 38) surrounding said rod and, at rest, defining an orifice of a diameter larger than that of said rod (24) and clamping the latter under the effect of a force exerted by the second piston (30).

7. Brake proportioning valve according to claim 6, characterized in that each jaw (36) assumes an outer shape of substantially frustoconical cross-section, the surface of which comes to bear on a part of complementary shape made in said bore, in order to clamp said rod (24).

8. Brake proportioning valve according to claim 6, characterized in that the jaws (38) assume the shape of a lever bearing on said body and receiving a force from said second piston (30) in order to clamp said rod (24).

9. Brake proportioning valve according to claim 4, characterized in that said locking means comprises an elastic ring (34) surrounding said rod (24) and seated in an annular space formed between said second piston (30) and said body, said elastic ring (34) having an inner orifice, of which the diameter at rest is larger than that of the rod (24), the volume of said space being such that, under the action of said second piston (30), said elastic ring (34) compresses said rod (24) and immobilizes it.

10. Brake proportioning valve according to claim 1 or 2, characterized in that said locking means is controlled by means of an electromagnet (40, 42) energized during a braking operation.

## Patentansprüche

1. Bremsdruckregler für ein Fahrzeug, wobei der Druckregler von der Achslast des Fahrzeugs abhängt und einen ersten Kolben (14) enthält, der in einer Stufenbohrung, die in einem Körper ausgeführt ist, verschiebbar ist und ein Ventil (18) trägt, das normalerweise geöffnet ist und zwischen einer Quelle für unter Druck stehendes Fluid und dem zugeordneten Bremskreis angeordnet ist, und wobei der erste Kolben (14) sich gegen die Kraft einer Feder (16) unter dem Einfluß des Fluiddrucks, der versucht, das Ventil (18) zu schließen, bewegen kann, wobei eine verschiebbare Stange (24) sich normalerweise zwischen einem Stößel (20), dessen Position von der Achslast des Fahrzeugs abhängt, und dem Ventil (18) abstützt, **dadurch gekennzeichnet**, daß er ein Verriegelungselement enthält, welches die verschiebbare Stange (24) bei einer Bremsung des Fahrzeugs festsetzt.

2. Bremsdruckregler nach Anspruch 1, **dadurch gekennzeichnet**, daß das Verriegelungselement herum zwischen dem Stößel (20) und der Verschlußklappe (18) um die Stange (24) angeordnet ist.

3. Bremsdruckregler nach einem der Ansprüche 1 oder 2, **dadurch gekennzeichnet**, daß die verschiebbare Stange (24) festgesetzt wird, sobald der Fluiddruck im zugeordneten Bremskreis eine vorbestimmte Schwelle übersteigt.

4. Bremsdruckregler nach Anspruch 3, **dadurch gekennzeichnet**, daß er außerdem einen zweiten verschiebbaren Kolben (30) enthält, der in der Bohrung angeordnet ist, den Fluiddruck im zugeordneten Bremskreis wahrnimmt und die Betätigung des Verriegelungselementes steuert.

5. Bremsdruckregler nach Anspruch 4, **dadurch gekennzeichnet**, daß das Verriegelungselement einen Satz flexibler Scheiben (32) enthält, die die Stange (24) umfassen und sich zum einen auf dem Körper und zum anderen auf dem zweiten Kolben (30) abstützen, und daß die Scheiben (32) eine innere Öffnung aufweisen, deren Durchmesser im Ruhezustand größer als der der Stange (24) ist, und unter dem Einfluß einer Druckkraft, die vom zweiten Kolben (30) aufgebracht wird, die Stange festklemmen.

6. Bremsdruckregler nach Anspruch 4, **dadurch gekennzeichnet**, daß das Verriegelungselement mehrere Spannbacken (36, 38) enthält, die die Stange umschließen und im Ruhezustand eine Öffnung definieren, deren Durchmesser größer als der der Stange (24) ist und die letztere unter Einfluß einer Kraft, die von dem zweiten Kolben (30) aufgebracht wird, festklemmen.

7. Bremsdruckregler nach Anspruch 6, **dadurch gekennzeichnet**, daß jede Spannbacke (36) im wesentlichen die äußere Querschnittsform eines Kegelstumpfes hat, dessen Obefläche zur Anlage an einem komplementär geformten Abschnitt der Stufenbohrung kommt, um die Stange (24) festzuklemmen.

8. Druckregler nach Anspruch 6, **dadurch gekennzeichnet**, daß die Spannbacken (38) in Form eines Hebels ausgebildet sind, der sich auf dem Körper abstützt und eine Kraft des zweiten Kolbens (30) aufnimmt, um die Stange (24) festzuklemmen.

9. Druckregler nach Anspruch 4, **dadurch gekennzeichnet**, daß das Verriegelungselement einen elastischen Ring (34) enthält, der die Stange (24) umschließt und in einem ringförmigen Raum gehalten wird, der zwischen dem zweiten Kolben (30) und dem Körper angeordnet ist, wobei der elastische Ring (34) eine innere Öffnung aufweist, deren Durchmesser in der Ruhestellung größer ist als der der Stange (24), und das Volumen des Raumes so ausgebildet ist, daß unter der Einwirkung des zweiten Kolbens (30) der elastische Ring (34) die Stange (24) fest umschließt und diese festlegt.

10. Bremsdruckregler nach Anspruch 1 oder 2, **dadurch gekennzeichnet**, daß das Verriegelungselement von einem Elektromagneten (40, 42) gesteuert wird, der bei einer Bremsung angeregt wird.
